# EUROPEAN PATENT SPECIFICATION

(11) **EP 2 008 134 B1**
(45) Date of publication and mention of the grant of the patent: **14.09.2011**
(21) Application number: 07735206.0
(22) Date of filing: 21.03.2007
(51) Int. Cl.: G02B 6/122, G02B 26/02

(54) **METHOD FOR PRODUCING REWRITABLE PHOTONIC DEVICES**
VERFAHREN ZUR HERSTELLUNG VON MEHRFACH BESCHREIBBAREN PHOTONISCHEN EINRICHTUNGEN
PROCÉDÉ DE PRODUCTION DE DISPOSITIFS PHOTONIQUES RÉINSCRIPTIBLES

(30) Priority: 22.03.2006 IT TO20060216
(43) Date of publication of application: 31.12.2008
(73) Proprietor: Consiglio Nazionale Delle Ricerche, 00185 Roma (IT)
(72) Inventor: WIERSMA, Diederik Sybolt, I-50036 Birigliano, VAGLIA (Firenze) (IT); VIGNOLINI, Silvia, I-59021 Vaiano (Prato) (IT); TÜRCK, Volker, 10711 Wilmersdorf (DE); INTONTI, Francesca, I-50122 Firenze (IT)
(74) Representative: Deambrogi, Edgardo
(86) International application number: PCT/IB2007/050989
(87) International publication number: WO 2007/107959

(56) References cited:
- WO-A-02/14913
- WO-A-02/082042
- WO-A-02/086615
- US-A1- 2005 111 804
- DOMACHUK P ET AL: "TRANSVERSE PROBED MICROFLUIDIC SWITCHABLE PHOTONIC CRYSTAL FIBER DEVICES" IEEE PHOTONICS TECHNOLOGY LETTERS, IEEE SERVICE CENTER, PISCATAWAY, NJ, US, vol. 16, no. 8, August 2004 (2004-08), pages 1900-1902, XP001212272 ISSN: 1041-1135
- DOMACHUK P ET AL: "Microfluidic tunable photonic band-gap device", APPLIED PHYSICS LETTERS, AIP, AMERICAN INSTITUTE OF PHYSICS, MELVILLE, NY, US LNKD- DOI:10.1063/1.1667592, vol. 84, no. 11, 15 March 2004 (2004-03-15), pages 1838-1840, XP012060761, ISSN: 0003-6951
- DATABASE INSPEC [Online] THE INSTITUTION OF ELECTRICAL ENGINEERS, STEVENAGE, GB 07 July 2008 BOG U ET AL: 'Microfluidic cavities in silicon-based photonic crystal slab waveguides' Database accession no. 10186205 & 2008 JOINT CONFERENCE OF THE OPTO-ELECTRONICS AND COMMUNICATIONS CONFERENCE (OECC) AND THE AUSTRALIAN CONFERENCE ON OPTICAL FIBRE TECHNOLOGY (ACOFT) 7-10 JULY 2008 SYDNEY, AUSTRALIA 2008 JOINT CONFERENCE OF THE OPTO-ELECTRONICS AND COMMUNICATIONS CONFERENCE (OECC) AND THE AUSTRALIAN CONFERENCE ON OPTICAL FIBRE TECHNOLOGY (ACOFT) IEEE PISCATAWAY, NJ, USA, page 2 PP. ISBN: 978-0-85825-807-5
- DOMACHUK P ET AL: "Microfluidic tunable photonic band-gap device" APPLIED PHYSICS LETTERS, AIP, AMERICAN INSTITUTE OF PHYSICS, MELVILLE, NY, US LNKD- DOI:10.1063/1.1667592, vol. 84, no. 11, 15 March 2004 (2004-03-15), pages 1838-1840, XP012060761 ISSN: 0003-6951
- DATABASE INSPEC [Online] THE INSTITUTION OF ELECTRICAL ENGINEERS, STEVENAGE, GB; 7 July 2008 (2008-07-07), BOG U ET AL: "Microfluidic cavities in silicon-based photonic crystal slab waveguides" Database accession no. 10186205 & 2008 JOINT CONFERENCE OF THE OPTO-ELECTRONICS AND COMMUNICATIONS CONFERENCE (OECC) AND THE AUSTRALIAN CONFERENCE ON OPTICAL FIBRE TECHNOLOGY (ACOFT) 7-10 JULY 2008 SYDNEY, AUSTRALIA, page 2 pp., 2008 Joint Conference of the Opto-Electronics and Communications Conference (OECC) and the Australian Conference on Optical Fibre Technology (ACOFT) IEEE Piscataway, NJ, USA DOI: DOI:10.1109/OECCACOFT.2008.4610596 ISBN: 978-0-85825-807-5

## Description

The present invention relates to a method for producing a spatially rewritable photonic device.

In modern telecommunications and electronics technology there is a trend towards the creation of optical devices and circuits. In order to produce these components photonic crystals, also called photonic band gap materials, are used.

A photonic crystal is a dielectric material with periodic variations in the dielectric constant. This phenomenon has an influence on the propagation of light which is similar to that which the atomic crystal potential has on the electronic structure. This periodic variation results in fact in the formation of a prohibited optical band, in a very similar manner to that which occurs within semiconductors as regards the energy levels which are prohibited for the electrons.

Electromagnetic waves with a frequency within a certain range, called the photonic band gap, are unable to propagate inside the photonic crystal and also the spontaneous emission of light is prevented within this frequency range.

The central frequency and the width of this energy gap depend on the variation in the refractive index, which in these materials may be modified externally.

The introduction of defects within the photonic crystal results in the formation of permitted energy states within the photonic band gap or results in modification of the prohibited states.

A two-dimensional photonic crystal is constructed by creating within a homogeneous planar structure a periodic effect in two directions; this may be obtained, for example, by forming a periodic succession of cylindrical pores which extend over the entire thickness of the planar structure.

The introduction of defects into this photonic crystal allows the propagation of modes within the range of frequencies which belong to the photonic band gap or results in the formation of localized states.

The creation of these defects is, however, a technically complex operation. The current technology for the creation of these defects consists, for example, in the insertion of pores with dimensions different from those forming the crystal or in the elimination of some pores from the porous matrix.

Document WO 02/086615 discloses a method and an apparatus for switching optical signals with a photon band gap device; document WO 02/14913 discloses an active photonic crystal waveguide device; document US 2005/0111804 discloses a composite material photonic crystal fibres and a method of production.

Document WO 02/082042 discloses a method for the creation of a photonic device comprising the steps of providing a photonic crystal having a plurality of cavities and injecting selectively into predetermined cavities a micro-quantity of a liquid so as to allow the introduction of permitted states within the photonic band gap of the crystal or the modification of the prohibited states.

The preamble of claim 1 has been based on document WO 02/082042.

One object of the present invention is to propose an innovative method for the introduction of defects in a photonic crystal so as to be able to construct easily photonic devices and circuits which are rewritable or able to be written, erased and rewritten.

These and other objects are achieved according to the invention by a method, the main characteristic features of which are defined in the appended claims.

According to the method of the invention as defined by claim 1, the defects are created by means of selective injection of a liquid into predetermined pores of the photonic crystal, in a pattern suitable for allowing the propagation of specific wavelengths which are otherwise inhibited.

In principle the liquid used may be any liquid which has a viscosity such as to allow the supply thereof by means of a micropipette.

The volatility and the viscosity of the liquid may be chosen depending on the desired stability characteristics of the photonic device.

Further characteristics and advantages of the invention will become clear from the detailed description which follows, provided purely by way of a non-limiting example with reference to the appended drawings in which:
- Figure 1 is a diagram of the test apparatus used to implement the method according to the invention;
- Figure 2 is a diagram illustrating operation in reflection mode of a microscope, used to monitor the infiltration process;
- Figure 3 is a diagram illustrating operation in luminescence mode of the microscope according to Figure 2;
- Figure 4 is an image of a sample infiltrated using the method according to the invention;
- Figure 5 is an image showing a detail of a sample with the respective photoluminescence graphs;
- Figure 6 is an image showing the variation of the dielectric constant and the spatial distribution of the mode TE of the detail according to Figure 5;
- Figure 7 is an image showing a waveguide created with the method according to the invention;
- Figure 8 is the band diagram for the modes TE of the structure shown in Figure 7;
- Figure 9 shows the intensity of the electric field and the magnetic field associated with a mode TE of the guide according to Figure 8; and
- Figure 10 is an image showing the electric and magnetic fields associated with a mode TE of an annular cavity created with the method according to the invention.

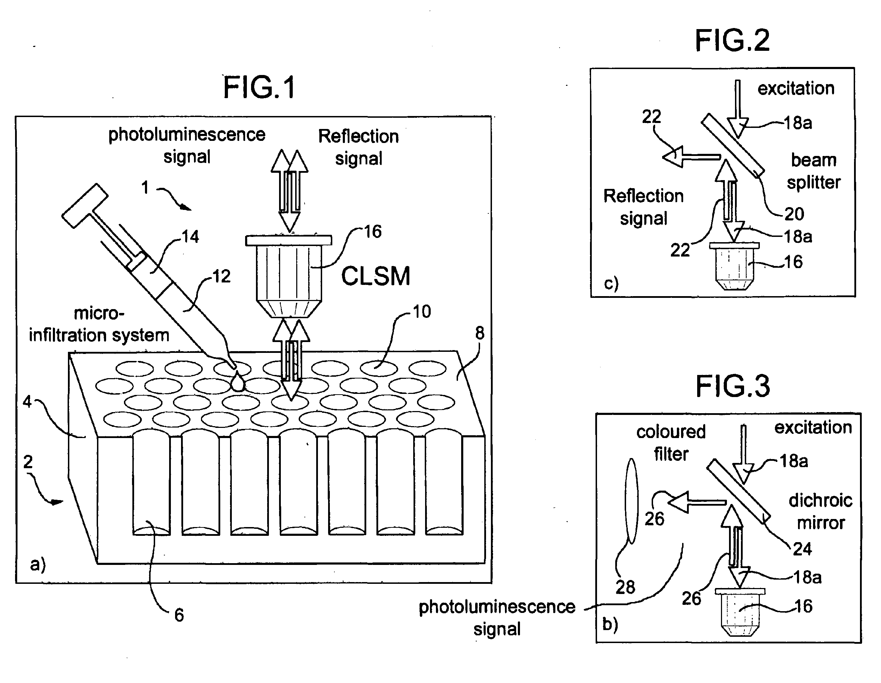

In Figure 1, 1 denotes the test apparatus used for implementing the method according to the invention.

This apparatus 1 comprises a two-dimensional photonic crystal 2 consisting of a support 4 and a plurality of cylindrical cavities 6. These cavities 6 open out only on one side 8 of the support 4 by means of circular holes 10.

These cavities 6 are infiltrated with a liquid 12 supplied by means of a micropipette 14. Carrying out of this infiltration method requires very precise monitoring of the entire test apparatus since the typical quantities of liquid which must be introduced into the cavities 6 of the photonic crystal 2 are of the order of tenths of femtolitres, i.e. about four orders of magnitude smaller than the quantity of liquid which emerges from the most sophisticated ink jet printer heads. The infiltration process is monitored by a confocal laser scan microscope (CLSM) indicated in Figure 1 by 16. This microscope is typically mounted on a standard commercial microscope and is equipped with a microinfiltration system developed for molecular applications, in order to transfer controlled quantities of liquid inside cells.

The microinfiltration system consists of a series of micropipettes 14 which have an outer diameter of between 0.1µm and 1µm and which may be moved, over the surface of the sample, with a precision less than or equal to 0.1µm. The hydraulic transmission of the movement of the pipettes reduces drastically the vibrations.

When the pipette is situated in the correct position on the sample, a controlled pressure is applied to it. The force exerted by this pressure produces infiltration of the liquid. In general it is preferable to use a liquid, the vapour tension of which is such that the liquid infiltrated into the pores is not subject to total evaporation at room temperature for a period of at least one day.

Since the capillary forces slow down enormously the evaporation inside the pores, liquids which are relatively volatile such as water or hydrocarbons are also used. These capillary forces are able to retain the liquid inside the cavities even if the latter should not be through-holes or should not be closed at one end as in the example described here; this is possible owing to the fact that the capillary forces which arise in these cases, where the diameters of the holes are very small, are greater than the corresponding force of gravity which would otherwise tend to cause the liquid to flow out.

Other liquids which may be used with success in this method are suspensions of micro or nano-particles, such as quantum dots, in a liquid, or oils, which may be used to obtain photonic devices which are stable for a prolonged period of several years or so.

An alternative which is of particular interest is that of liquid crystals. These are of particular interest since they have a refractive index which depends on the temperature and on a possible external electric field which is applied to them. In this case it is possible to produce tunable devices, namely devices which vary their performance depending on the temperature variation or the electric field applied. For example, it is possible to produce a diverter able to send light in different directions upon variation of the electric field applied locally at different points of the photonic crystal.

The tunability of a device may, moreover, also be obtained by mixing two or more liquids which have a different refractive index.

The removal of the liquid from the pores in order to allow rewriting of the device may be performed, for example, by arranging the infiltrated photonic crystal inside an ultrasound bath.

In order to obtain permanent (non rewritable) photonic devices it is also envisaged the use of liquids which are capable of hardening or crosslinking, such as resist or liquid prepolymers, for example.

In a preferred embodiment a tracer, for example a fluorescent dye, able to emit a radiation in the visible range when excited, is added to the liquid. The presence of this tracer allows the infiltration steps to be monitored, allowing location of the liquid inside the pores.

In an example of embodiment of this method it is possible to infiltrate into the cavities of a two-dimensional photonic crystal a solution of water and Rhodamina 6G, an organic tincture which, when suitably excited, emits light in the visible range. The photonic crystal may be, for example, a macroporous silicon sample produced by means of electrochemical etching of a silicon substrate of the type p; the pores may be organized in a triangular symmetry, characterized by two different lattice constants equal to 1.5µm and 4.2µm.

The chemical and physical properties of the infiltrated solution are very interesting: firstly the refractive index of the aqueous solution is 1.33 and, since the solution acts as a local defect, states permitted within the photonic band gap are thus created. The viscosity of the liquid is 1mPa/s and therefore it is such as to facilitate the deposition thereof inside the cavities of the crystal. Finally, owing to the luminescence of the solution, it is possible to verify the correct execution of the infiltration step by observing the surface of the sample with the CLSM microscope in the luminescence configuration. If the solution should not be luminescent this verification may be performed using the CLSM in reflection mode. These two operating modes of the microscope will be explained below.

The emission properties of the organic tincture depend, in general, on the solvent in which they are dissolved. The solution of Rhodamina 6G and water is characterized by a slightly asymmetrical emission spectrum centred around 550nm, with a small tail on the side of the greater wavelengths. When the water evaporates the emission spectrum changes, the position of the peak moves to 570nm and the asymmetry becomes more pronounced towards greater wavelengths. This shift towards red of the emission provides a valuable mechanism for monitoring the evolution over time, and therefore the evaporation, of defects introduced intentionally.

Figure 2 shows operation of the CLSM microscope 16 in the reflection configuration. 18a denotes a ray striking a separating baffle or beam splitter 20. The ray 18a which has passed through the beam splitter 20 reaches the microscope 16; the light 22 reflected by the photonic crystal positioned underneath the microscope, striking the beam splitter 20, is deviated towards a detector not shown in the figure.

Figure 3, on the other hand, illustrates operation of the CLSM microscope 16 in the luminescence configuration. 18a denotes the incident ray which, passing first through a dichroic mirror 24 and then the microscope 16, reaches the photonic crystal, excites the Rhodamina 6G which produces a photoluminescence signal 26. This signal 26 is deviated by the mirror 24 and reaches a passband optical filter 28 which allows only the wavelengths emitted by the fluorescent molecule to pass through.

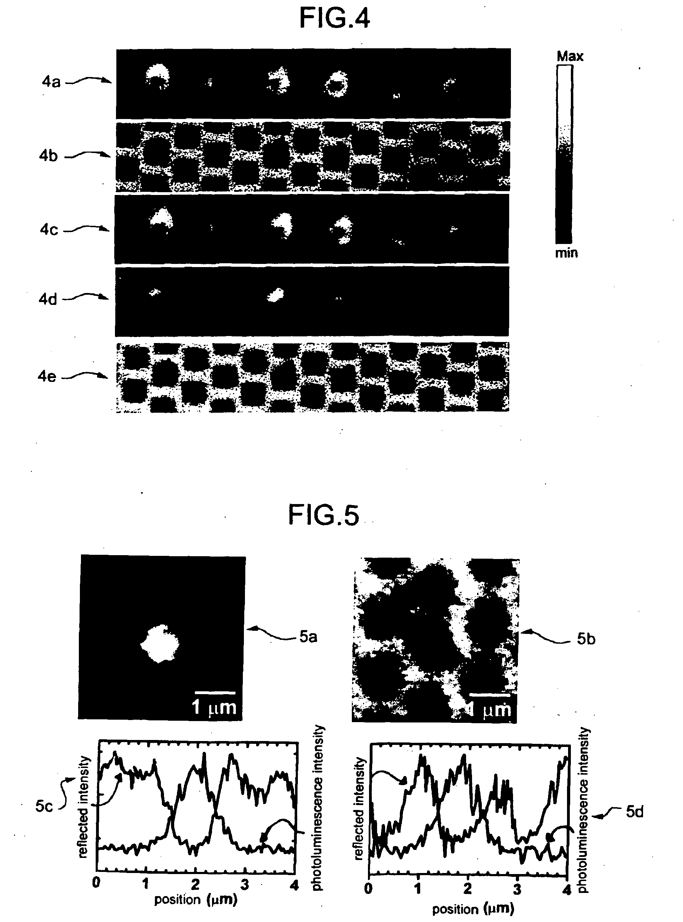

Figure 4 shows some images of a sample treated with this process. The image 4a shows six successive infiltrations performed in the region of the single pore, in the sample with a greater lattice constant, which produce a well defined linear defect. The image was obtained with the microscope in the luminescence configuration, exciting at a wavelength of 488nm and detecting the photoluminescence signal emitted by the Rhodamina. The microscope is provided with a dichroic mirror centred at 510nm and a passband filter which transmits within the range of 520-560nm so as to have a good superimposition with the signal produced by the Rhodamina.

4b denotes the image obtained instead with the microscope in the reflection configuration. In this case the dichroic mirror has been replaced by a standard 50/50 beam splitter and the passband filter has been eliminated.

Since the samples consist of air holes organized with triangular symmetry, the dark regions, indicating low reflectivity, correspond to the air holes, while the light regions indicate the silicon zones situated between the holes.

The image 4c shows the same sample portion as the image 4a obtained, again in luminescence mode, 24 hours after carrying out the infiltration process. As can be easily noted, there are no significant modifications. This is an indication of the stability of the process.

Figure 4d shows the same sample portion as the image 4a, again obtained in luminescence mode, where however the passband filter has been replaced by a passband filter centred at 585nm, which has greater superimposition with the signal produced by the Rhodamina. In this case, as can be seen, the photoluminescence is emitted only from three pores. If we compare Figure 4d with Figure 4e, which is the same image obtained in reflection mode, it can be established that the signal is located on the edge of the pores. From this it can be concluded that, after one day, the Rhodamina inside the pores is still in solution form, while any droplets of liquid accidentally deposited around the pores, on the surface of the sample, are evaporated. In fact, small volumes of liquid evaporate rapidly if they are in a free space or on a surface; vice versa, within the pores, the capillary forces slow down enormously this evaporation.

Figures 5a and 5b show the images, in emission and reflection mode, respectively, of a single infiltrated pore with a radius of 550nm. The graphs 5c and 5d show the horizontal and vertical profiles, respectively, taken at the centre of the images 5a and 5b. The perfect superimposition between the maximum of the photoluminescence curves and the minimum of the reflection curves confirms that the solution is present only in the individual pore selected.

When carrying out infiltration tests on pores in samples with a smaller lattice constant, i.e. of 1.5µm, significant differences were not noted. This leads one to believe that this method may be applied also to samples with lattice constants of up to 700nm, this value corresponding to crystals having a photonic band gap in the range of wavelengths used for telecommunications, namely about 1.5µm.

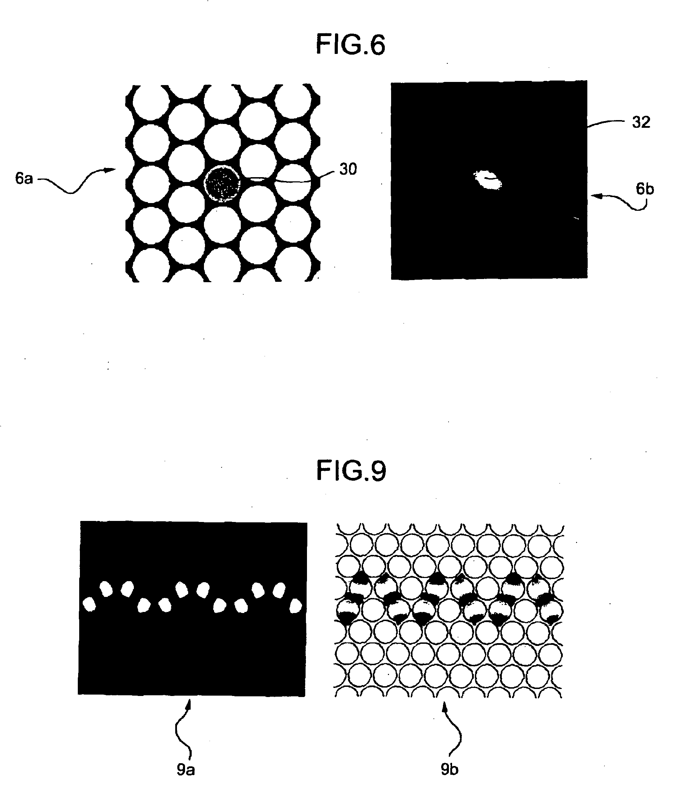

Figure 6a shows the periodic variation of the dielectric constant with the introduction of a defect. The pores are characterized by a radius of 0.45a where a is the lattice constant of the photonic crystal; the pore infiltrated with water is indicated by 30 and is characterized by a dielectric constant of 1.77, while the silicon substrate has a dielectric constant of 12.

Figure 6b shows the spatial distribution 32 of the mode TE of the electric field, introduced by the defect, at a wavelength of 0.47ωa/2µc. The creation of the defect produces a localized state, as is evident from the marked localization of the electric field's intensity around the position of the infiltrated pore.

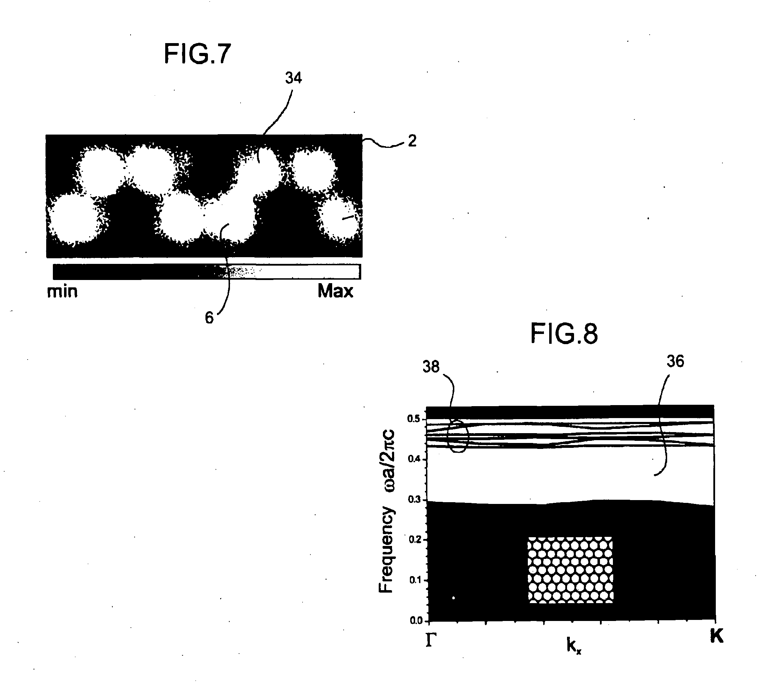

Figure 7 shows an example of an optical device created with this method. 34 denotes a waveguide formed with the successive microinfiltration of liquid, repeating a basic block of four infiltrated pores organized in a predetermined geometry. The image was obtained in the emission configuration.

Figure 8 shows the band diagram for propagation of the modes TE of the structure of Figure 7. 36 denotes the photonic band gap of the crystal which extends from a wavelength of 0.3ωa/2µc to a wavelength of 0.5ωa/2µc; the wavelength causes the appearance, at the wavelength of 0.45ωa/2µc, of a small band of guided modes 38 within this range 36 where the propagation of light is inhibited.

Figure 9a shows the intensity of the electric field and Figure 9b shows the magnetic field associated with one of the modes TE introduced by the wave guide in the band gap of the photonic crystal.

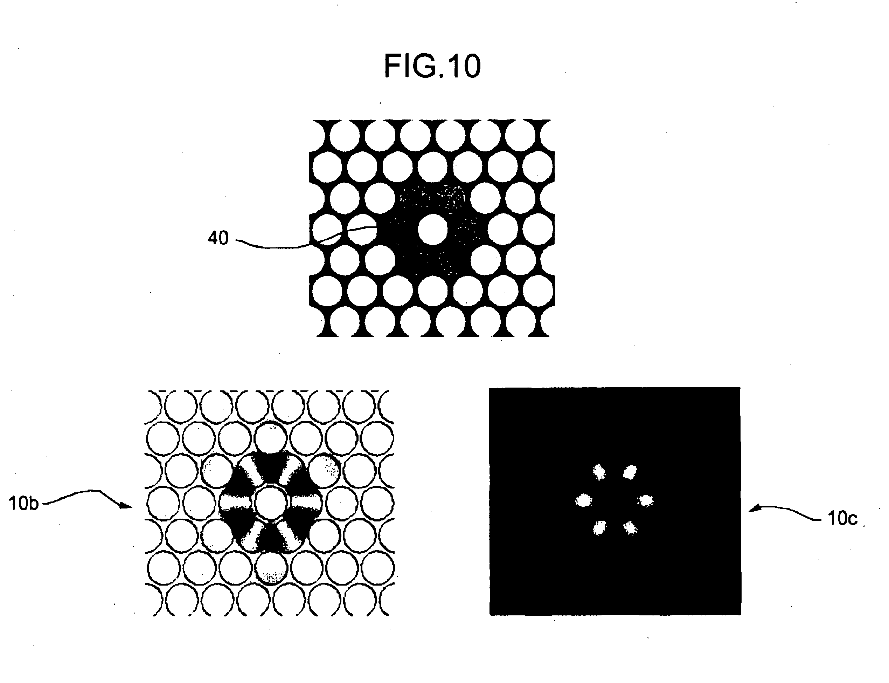

Figure 10a shows another example of an optical device created with this method, in particular an infiltration of an annular cavity 40 so that the magnetic field, (figure 10b), and the intensity of the electric field, (figure 10c), associated with one of the modes TE introduced by the waveguide in the band gap of the photonic crystal are localized in the region of the defect introduced.

By way of an alternative to the examples shown in Figures 7 to 10, with this method it is possible to obtain many other optical components such as, for example, micro-lasers, transistors, resonators, filters, optical switches or LEDs which may be combined to create a photonic circuit for the transmission of optical signals.

Naturally, the principle of the invention remaining the same, the embodiments and details of constriction may be widely varied with respect to those described above and illustrated purely by way of a non-limiting example, without thereby departing from the scope of protection of the invention as defined in the appended claims.

## Claims

1. Method for the creation af a rewritable photonic device comprising the steps of:
- providing a photonic crystal (2) having a plurality of cavities (6);
- injecting selectively into predetermined cavities a micro-quantity of a liquid (12) so as to allow the introduction of permitted states within the photonic band gap of the crystal (2) or the modification of the prohibited states;
the method being **characterized in that** said injection is performed using a system of micro-pipettes (14) and means for moving the micro-pipettes (14) over the surface of the photonic crystal.

2. Method according to Claim 1, wherein the liquid (12) contains a tracer substance able to emit, if suitably excited, a radiation in the visible range so as to allow easy location of the said liquid (12) inside the cavities (6).

3. Method according to Claim 1 or 2, wherein the liquid (12) is a solvent, the vapour tension of which is such that injection of said liquid (12) in the cavities (6) causes a modification in the permanent photonic crystal (2) for a period of not less than one day.

4. Method according to any one of the preceding claims, wherein the liquid (12) is chosen from among water, hydrocarbons, oils, liquid crystals, or suspensions of micro or nano-particles in a liquid.

5. Method according to Claim 1, wherein the liquid (12) is capable of hardening.

6. Method according to Claim 5, wherein the liquid (12) is chosen from resist liquids or liquid prepolymers.

7. Method according to any one of the preceding claims, wherein the injection of liquid (12) is monitored by a CLSM (16).

## Patentansprüche

1. Verfahren zur Herstellung einer wiederbeschreibbaren photonischen Einrichtung, umfassend die Schritte:
- Bereitstellen eines photonischen Kristalls (2), der eine Mehrzahl von Kavitäten (6) aufweist,
- Selektives Injizieren einer Mikro-Menge einer Flüssigkeit (12) in vorbestimmte Kavitäten, so dass die Einführung von erlaubten Zuständen innerhalb der photonischen Bandlücke des Kristalls (2) oder die Modifikation der verbotenen Zustände ermöglicht wird,
wobei das Verfahren **dadurch gekennzeichnet ist, dass** die Injektion unter Verwendung eines Systems von Mikro-Pipetten (14) und von Mitteln zum Bewegen der Mikro-Pipetten (14) über die Oberfläche des photonischen Kristalls durchgeführt wird.

2. Verfahren nach Anspruch 1, wobei die Flüssigkeit (12) eine Tracer-Substanz enthält, die bei ausreichender Anregung in der Lage ist, eine Strahlung im sichtbaren Bereich zu emittieren, so dass eine einfache Ortsbestimmung der Flüssigkeit (12) innerhalb der Kavitäten (6) ermöglicht wird.

3. Verfahren nach Anspruch 1 oder 2, wobei die Flüssigkeit (12) ein Lösungsmittel ist, dessen Dampf-Spannung derart ist, dass die Injektion der Flüssigkeit (12) in die Kavitäten (6) eine Modifizierung in dem permanenten photonischen Kristall (2) für eine Dauer von nicht weniger als einem Tag bewirkt.

4. Verfahren nach einem der vorhergehenden Ansprüche, wobei die Flüssigkeit (12) ausgewählt wird aus Wasser, Kohlenwasserstoffen, Ölen, Flüssigkristallen oder Suspensionen von Mikro- oder Nano-Partikeln in einer Flüssigkeit.

5. Verfahren nach Anspruch 1, wobei die Flüssigkeit (12) in der Lage ist, hart zu werden.

6. Verfahren nach Anspruch 5, wobei die Flüssigkeit (12) ausgewählt ist aus Resist-Flüssigkeiten oder flüssigen Präpolymeren.

7. Verfahren nach einem der vorhergehenden Ansprüche, wobei die Injektion von Flüssigkeit (12) durch ein CLSM (16) überwacht wird.

## Revendications

1. Procédé pour la création d'un dispositif photonique réinscriptible, comprenant les étapes consistant à :
- disposer d'un cristal photonique (2) ayant une pluralité de cavités (6) ;
- injecter sélectivement dans des cavités prédéterminées une microquantité d'un liquide (12) de façon à permettre l'introduction d'états autorisés à l'intérieur de la bande interdite photonique du cristal (2) ou la modification des états prohibés ;
le procédé étant **caractérisé en ce que** ladite injection est effectuée par utilisation d'un système de micropipettes (14) et de moyens pour déplacer les micropipettes (14) sur la surface du cristal photonique.

2. Procédé selon la revendication 1, dans lequel le liquide (12) contient une substance traceuse capable d'émettre, si elle est convenablement excitée, un rayonnement dans la gamme visible de façon à permettre une localisation aisée dudit liquide (12) à l'intérieur des cavités (6).

3. Procédé selon la revendication 1 ou 2, dans lequel le liquide (12) est un solvant ayant une tension de vapeur telle que l'injection dudit liquide (12) dans les cavités (6) provoque une modification dans le cristal photonique permanent (2) pendant une période non inférieure à un jour.

4. Procédé selon l'une quelconque des revendications précédentes, dans lequel le liquide (12) est choisi parmi l'eau, les hydrocarbures, les huiles, les cristaux liquides, et les suspensions de micro- ou nano-particules dans un liquide.

5. Procédé selon la revendication 1, dans lequel le liquide (12) est capable de durcir.

6. Procédé selon la revendication 5, dans lequel le liquide (12) est choisi parmi les liquides de réserve et les prépolymères liquides.

7. Procédé selon l'une quelconque des revendications précédentes, dans lequel l'injection de liquide (12) est surveillée par un MCBL (16).
